(19) Europäisches Patentamt
European Patent Office
Office européen des brevets

(11) **EP 2 530 419 A2**

(12) **EUROPÄISCHE PATENTANMELDUNG**

(43) Veröffentlichungstag:
**05.12.2012 Patentblatt 2012/49**

(51) Int Cl.:
***F28D 20/00*** *(2006.01)*    ***F28D 20/02*** *(2006.01)*

(21) Anmeldenummer: **12401099.2**

(22) Anmeldetag: **15.05.2012**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **28.05.2011 DE 102011050698**
**06.03.2012 DE 102012101862**

(71) Anmelder: **Ed. Züblin AG**
**70567 Stuttgart (DE)**

(72) Erfinder:
• **Der Erfinder hat auf seine Nennung verzichtet.**

(54) **Mehrteiliger Hochtemperaturwärmespeicher aus Speichermaterialien unterschiedlicher Temperaturbeständigkeit**

(57) Erfindungsgemäß wird der Hochtemperaturwärmespeicher aus zwei oder mehr in Reihe geschalteten Speichermaterialien mit unterschiedlicher Beständigkeit gegen thermische Belastung ausgestattet, wobei die unterschiedlichen Speichermaterialien nur bis maximal zu der Temperatur, gegen die sie beständig sind, mit Wärme beladen werden.

Die Beladung des Hochtemperaturwärmespeichers geschieht dergestalt, daß das Arbeitsmedium (ein Fluid), das die Wärme in den Speicher transportiert, beim Austritt aus dem jeweiligen Speichermaterial und Eintritt in das nächste nur noch maximal eine Temperatur aufweist, gegen die das Speichermaterial dieses folgenden Speicherteils beständig ist.

Das Entladen des Speichers ist unkritischer, da das nächstgelegene Speichermaterial dann immer das temperaturbeständigere ist!

Beladung (%)
(entspricht ungefähr Temperaturverlauf des Wärmeträgers bzw. des Speichermaterials)

Eindimensionale Ersteckung des Wärmespeichers

Eintritt Wärmespeicher          Austritt Wärmespeicher

Fig. 1a „Idealer" Wärmespeicher, während der Beladung

EP 2 530 419 A2

EP 2 530 419 A2

Beladung (%)
(entspricht ungefähr Temperaturverlauf des Wärmeträgers bzw. des
Speichermaterials)

Eindimensionale Ersteckung des Wärmespeichers

Eintritt Wärmespeicher        Austritt Wärmespeicher

Fig. 1b „Idealer" Wärmespeicher, beladen

Beladung (%)
(entspricht ungefähr Temperaturverlauf des Wärmeträgers bzw. des
Speichermaterials)

Eindimensionale Ersteckung des Wärmespeichers

Eintritt Wärmespeicher        Austritt Wärmespeicher
Austritt zu Arbeitsmaschine

Fig. 1c „Idealer" Wärmespeicher, während der Entladung

Beladung (%)
(entspricht ungefähr Temperaturverlauf des Wärmeträgers bzw. des
Speichermaterials)

Eindimensionale Ersteckung des Wärmespeichers

Eintritt Wärmespeicher        Austritt Wärmespeicher
Austritt zu Arbeitsmaschine

Fig. 1d „Idealer" Wärmespeicher, entladen

**Beschreibung**

Technisches Gebiet

Die Erfindung betrifft Hochtemperaturspeicher für die Speicherung thermischer Energie, besonders zum Zwecke der späteren Gewinnung elektrischer Energie vermittels einer Übertragung der Wärme aus dem Wärmespeicher auf ein fluides Medium (Wärmeträger), welches entweder

- direkt als Arbeitsmedium vermittels einer Arbeitsmaschine einen elektrischen Generator antreibt oder
- ein anderes fluides Medium erhitzt, welches dann als Arbeitsmedium vermittels einer Arbeitsmaschine einen elektrischen Generator antreibt. Insbesondere handelt es sich bei dem fluiden Medium, welches als Arbeitsmedium dient, um ein komprimiertes Gas, welches bei seiner Expansion Volumenarbeit verrichtet.

Stand der Technik

Für die Speicherung regenerativer Energien sind für solarthermische Parabolrinnenkraftwerke Salzschmelzenspeicher oder Betonspeicher als Wärmespeicher für die Zeit, in der keine Sonne scheint, bekannt.
Für die Zwischenspeicherung von Windenergie sind wiederum Druckluftspeicherkraftwerke (CAES, Compressed Air Energy Storage) bekannt. Bei der Erzeugung der Druckluft durch Kompression mittels der aus regenerativen Energiequellen (vor allem Windenergie) stammenden Energie wird auch Wärme erzeugt.
Um den Wirkungsgrad von Druckluftspeicherkraftwerken zu erhöhen, ist geplant, die bei der Kompression der Luft freiwerdende Wärme in einem Wärmespeicher zwischenzuspeichern. Solche Druckluftspeicherkraftwerke werden adiabatische Druckluftspeicherkraftwerke (AA-CAES, Advanced Adiabatic Compressed Air Energy Storage) genannt (auch wenn die Kompression und Expansion der Luft nur annähernd adiabatisch erfolgt). Je nach Größe der Kompression werden hierfür Wärmespeicher benötigt, die viele hundert Grad Celsius aushalten.
Bei den geplanten Hochtemperaturspeichern wird die gesamte beim Komprimieren freiwerdende Wärme zum überwiegenden Teil (von Restwärme im Gas und Wandeffekten abgesehen) in einer einzigen Art von Speichermaterial gespeichert, welches gegen die erforderliche Temperatur beständig ist.
Dieses Material kann dabei durchaus auch aus mehreren nicht innig vermischten Komponenten bestehen, die kleinräumig nicht homogen angeordnet sind (z.B. Speichermaterial plus angrenzendes Wärmeleitmaterial, das die Beladung/Entladung beschleunigt, oder Metallkugeln mit flüssigem oder schmelzfähigem Inhalt). (Im folgenden ist daher immer auch ein solches "Konstruktionsmaterial" mit eingeschlossen, wenn von "Material" gesprochen wird.)
Das Speichermaterial kann in fester, füssiger oder flüssiger und fester Form vorliegen (z.B. Metalle als Latentwärmespeicher, siehe z.B. WO 2010/084161 A1 oder WO 2011/163399 A1). Gasförmige Wärmespeichermaterialien sind durch die geringe Masse oder, diese teilweise kompensierend, die Notwendigkeit hohen Druckes weniger geeignet. Wärmespeichermaterialien, die gleichzeitig eine flüssige und eine gasförmige Phase aufweisen sind hingegen in manchen Fällen geeignet.
Als Materialien für einen Hochtemperaturwärmespeicher, welche hohe Temperaturen aushalten, sind z.B. viele Metalle, Halbmetalle oder Legierungen bekannt, aber auch deren Oxide oder Nitride in Form von Keramiken. Auch einige Karbonate sind bis zu nicht gar zu hohen Temperaturen noch beständig. Nitrate eignen sich z.B. als Komponenten für Salzschmelzen bei nicht zu hohen Temperaturen und werden z.B. als Wärmespeicher in bestehenden solarthermischen Kraftwerken eingesetzt, in denen sie die tagsüber über Wärmeträgeröle aus den Kollektoren zugeführte Wärme aufnehmen und nachts diese Wärme wieder direkt oder indirekt an ein Arbeitsmedium übertragen, welches vermittels einer Arbeitsmaschine einen elektrischen Generator antreibt. Einige Salze, wie z.B. Natriumchlorid, stellen auch geeignete und gleichzeitig billige Feststoffwärmespeichermaterialien dar, da sie relativ hohe Wärmeleitfähigkeiten aufweisen.
Ein keramischer Feststoffwärmespeicher zum Zwecke der Erwärmung von Druckluft, welche in einem unterirdischen Druckluftspeicher gespeichert wurde, ist z.B. in der EP 1 857 614 B1 beschrieben.
Solche Speicher sind aufgrund ihres großen Volumens und der notwendigen Beständigkeit nicht nur des Speichermaterials, sondern auch des Behältnisses in dem das Speichermaterial enthalten ist, aufwendig und teuer, denn das Behältnis muß (falls seine Wandung nicht gekühlt wird) gleichzeitig druck- und temperaturstabil sein!

Aufgabe der Erfindung

Aufgabe der Erfindung ist es, einen Hochtemperaturwärmespeicher für Temperaturen über 400° Celsius, bevorzugt mehr als 500° Celsius, anzugeben, der kostengünstiger ist.
Speziell soll dieser Wärmespeicher für ein adiabatisches Druckluftspeicherkraftwerk tauglich sein.

Darstellung der Erfindung

Die Aufgabe wird durch die im Kennzeichen des Anspruchs 1 angegebenen Merkmale gelöst.
Die Erfindung ist für solarthermische Speicher verwendbar und für Wärmespeicher für Druckluftspeicherkraftwerke. Besonders geeignet ist sie für Wärmespeicher von Druckgasspeicherkraftwerken, bei denen das Problem des hohen Druckes des arbeitsverrichtenden Wärmeträgers Gas (meist Luft) auftritt, das hohe Anforderungen an die Stabilität eines Wärmespeichers stellt.

Wesentliches Merkmal der Erfindung ist es dabei, die maximale zu speichernde Wärmemenge $Q_{gesamt}$, die bei der (näherungsweise) adiabatischen Kompression der Druckluft in der Druckluft erzeugt wird, nicht, wie bei bisher vorhandenen oder geplanten Wärmespeichern, in einem Speicher aus nur einem einzigen "Konstruktionsmaterial" zu speichern, sondern die Wärmemenge $Q_{gesamt}$ in mindestens zwei Anteile aufzuteilen, wobei nur ein Anteil (in den meisten Fällen der größere) bei der maximalen Höchsttemperatur gespeichert wird und der mindestens eine andere Anteil bei einer niedrigeren Temperatur.

Mit $Q_{gesamt}$ ist in diesem Text nicht die absolute Gesamtwärmemenge gerechnet vom absoluten Nullpunkt gemeint, sondern die relative Gesamtwärmemenge, die der Wärmeträger (z.B. Druckluft) im Temperaturbereich zwischen der äußeren Umgebungstemperatur und der Eintrittstemperatur in den Gesamtwärmespeicher (z.B. durch die adiabatische Kompression, im Falle eines Solarthermiekraftwerkes durch solare Erwärmung) erhält. Auch die anderen relativen Wärmeanteile beziehen sich auf die äußere Umgebungstemperatur als Basis oder auf die minimale Temperatur, die der Wärmeträger vor einer Wiedererwärmung annimmt.

$$Q_{gesamt} = Q_{hoch} + \ldots\ldots + Q_{tief} + Q_{Verlust}$$

$Q_{vefrlust}$ ist der Anteil der Wärme, der in die Umgebung abgegeben wird. Ein Teil davon ist die Restwärme im Wärmeträger, der nach dem Beladen des Wärmespeichers wieder aus diesem austritt. $Q_{verlust}$ sollte möglichst gering gehalten werden. Ein sinnvoller Wert ist maximal 5% von $Q_{gesamt}$, bevorzugt maximal 2% von $Q_{gesamt}$. Hierzu muß bei Verwendung eines üblichen Hochtemperaturwärmespeichers dieser größer ausgelegt werden als eigentlich nötig. Dies wird später noch eingehender erläutert werden. Erfindungsgemäß findet nun die Speicherung des Anteils $Q_{hoch}$ mit der maximalen Höchsttemperatur $T_{hoch}$ in einer anderen Art von Speichermaterial statt als der mindestens eine andere Anteil $Q_{tief}$, der bei niedrigerer Temperatur $T_{tief}$ gespeichert wird!

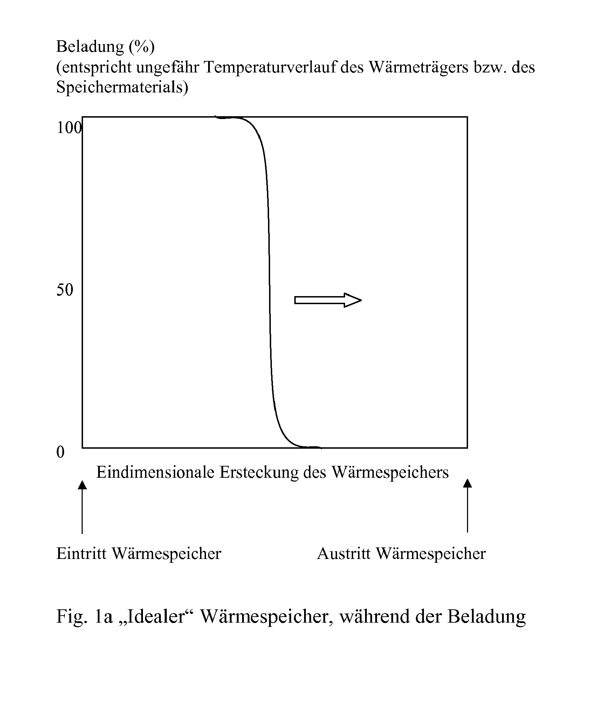

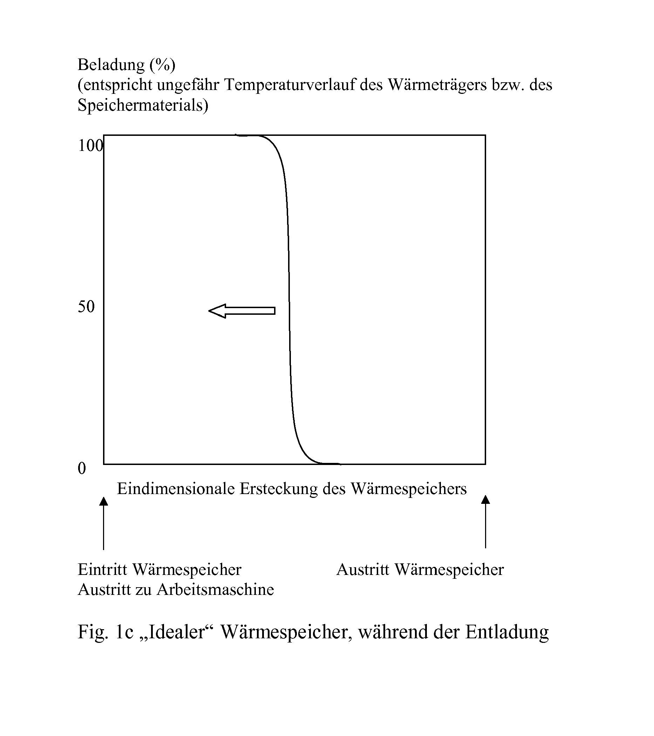

Die erfinderische Lösung der Aufspaltung der Gesamtwärmemenge $Q_{Gesamt}$ in Hoch- und Niedertemperaturanteile ist vor allem eine Folge der Nichtidealität des Wärmespeichers und seines Betriebes. In einem idealen Wärmespeicher, der im thermodynamischen Gleichgewicht betrieben würde (was unmöglich ist, weil dann Be- und Entladung unendliche Zeit benötigen würden) und in dem das Wärmespeichermaterial die Wärme aus dem Wärmeträger unendlich schnell aufnähme bzw. unendlich schnell an diesen abgäbe, dabei aber keine Wärmeleitung im Speichermaterial entlang des Strömungsweges des Wärmeträgers (z.B. Gases) aufträte, träte fast keine Verlustwärme mit dem austretenden Gas aus, wenn der Wärmespeicher bis zu seinem Maximum gefüllt würde. Dieser Fall ist in **Fig.1a** veranschaulicht: Eine sehr steile Kennlinie wandert hierbei bei Beladung durch den Wärmespeicher. (Bei der Entladung wandert sie in der Gegenrichtung, siehe **Fig.1c**)

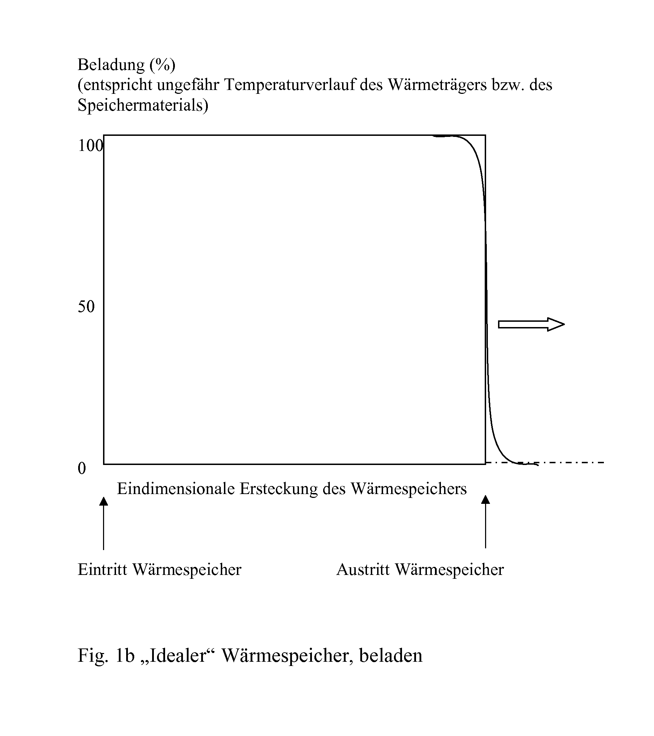

Die Steilheit der Kennlinie ist abhängig von der Wärmekapazität des Speichermaterials und dem Wärmeinhalt des Wärmeträgers zwischen der Eintritts- und Austrittstemperatur aus dem Wärmespeicher. Die gesamte Wärme des Wärmeträgers wird im "idealen" Wärmespeicher auf der kürzestmöglichen Strecke an das Speichermaterial abgegeben. Die Kennlinie kann also auch beim "idealen" Wärmespeicher nie genau senkrecht verlaufen! (Sie wäre senkrecht nur bei unendlicher Wärmekapazität des Speichermaterials! Dann benötigte man aber gar keinen ausgedehnten Speicher, weil alle Wärme schon in einer unendlich dünnen Schickt aufgenommen werden könnte!) In **Fig.1b** ist die Kennlinie mit ihrem Wendepunkt bis zum Ende des Speichers gelangt, es tritt jetzt also Wärmeträger mit der im Mittelbereich liegenden "Temperatur des Wendepunktes" aus dem Speicher aus. Wie man sieht, ist nur ein sehr kleiner Teil des Speichers (kleine Fläche oben rechts) nicht auf Maximaltemperatur, und es ist auch nur eine sehr kleine Menge Verlustwärme (kleine Fläche unter dem Schwanz der ausgetretenen Kurve) mit dem Wärmeträger aus dem Wärmespeicher ausgetreten.

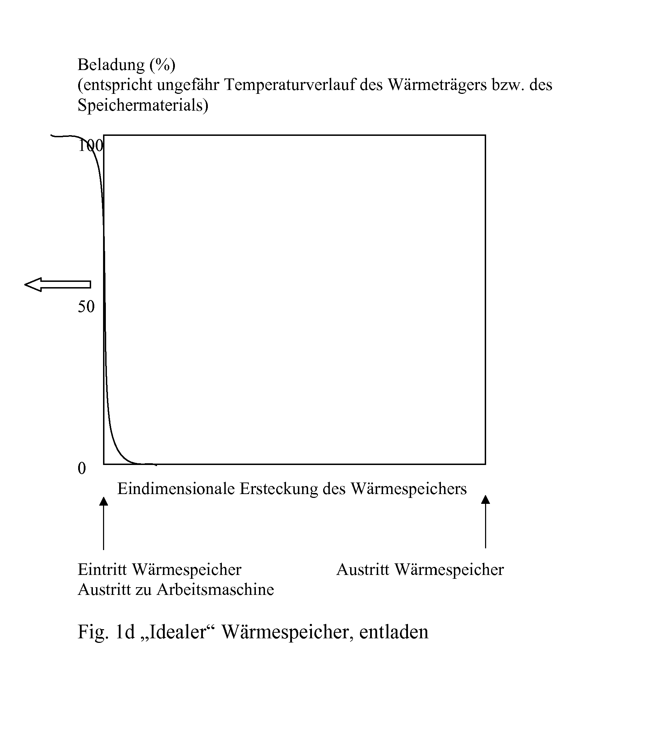

In **Fig.1d** ist der Zustand des wieder entladenen Wärmespeichers gezeigt. Der Wärmespeicher ist nicht völlig entladen, sondern enthält noch eine kleine Menge Wärmeenergie (links in der Ecke unterhalb der Kurve). Der Wärmeträger verläßt in diesem Beispiel den Wärmespeicher schon mit einer Temperatur unterhalb der Maximaltemperatur. Dies ist noch nicht schädlich, falls (im Falle eines Druckluftkraftwerks) bei dieser Temperatur keine sich schädlich auswirkenden Kondensationsvorgänge in der Arbeitsmaschine erfolgen. Ansonsten darf die Kennlinie nur so weit aus dem Speicher herauswandern, daß diese minimale erlaubte Temperatur noch nicht erreicht ist.

Die unterschiedlichen Speichermaterialien des erfindungsgemäßen realen Speichers sind (im technischen Sinne, nicht im theoretischen Sinne) thermisch voneinander und auch gegen die Umgebung hinreichend isoliert, so daß nur eine sehr langsame Temperaturangleichung der unterschiedlichen Speichermaterialien untereinander oder an eine Umgebung stattfindet. Der Gesamtwärmespeicher besteht also aus Segmenten aus unterschiedlichen Wärmespeichermaterialien, die direkt aneinandergefügt sein können, oder auch isoliert mit längeren (bevorzugt isolierten) Verbindungen dazwischen stehen können.

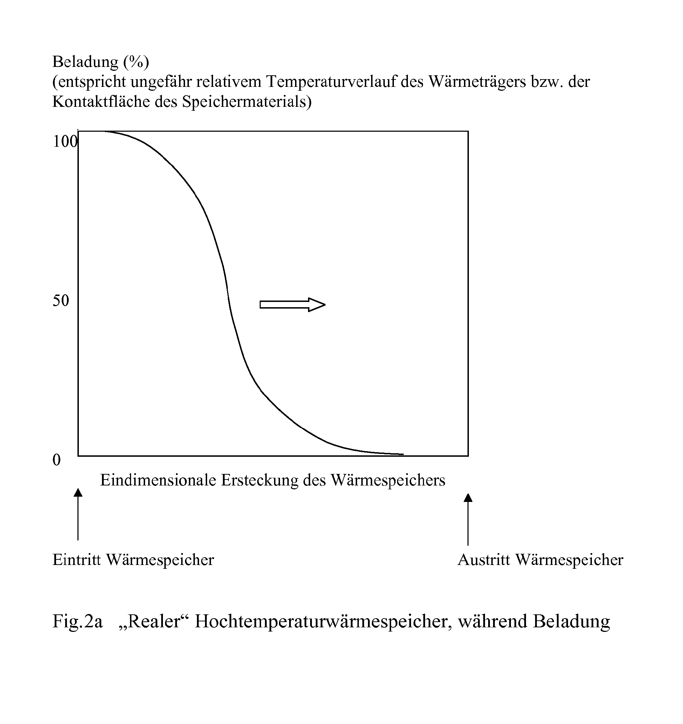

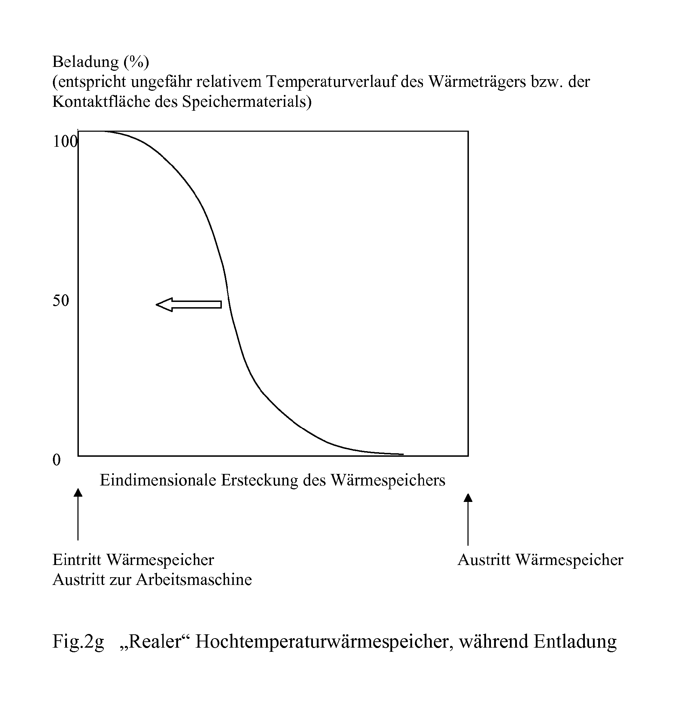

Die **Fig.2a** veranschaulicht den Verlauf der Kennlinie in einem realeren Speicher während dessen Beladung. (Bei der Entladung wandert sie in die Gegenrichtung, siehe **Fig.2g** .) Die Kennlinie verläuft hier deutlich flacher, weil der Wärmeübergang aus dem Wärmeträger ins Innere des Speichermaterials Zeit benötigt. Die Kontaktfläche des Speichermaterials zum Wärmeträger hat dann schon die Temperatur des Wärmeträgers erreicht, aber das Innere des Speichermaterials hinkt diesem Temperaturverlauf hinterher. Im Endeffekt bedeutet dies, daß sich heißer Wärmeträger schon tiefer in den Wärmespeicher hineinbewegen kann, bevor das Wärmespeichermaterial an dessen Anfang voll beladen ist.

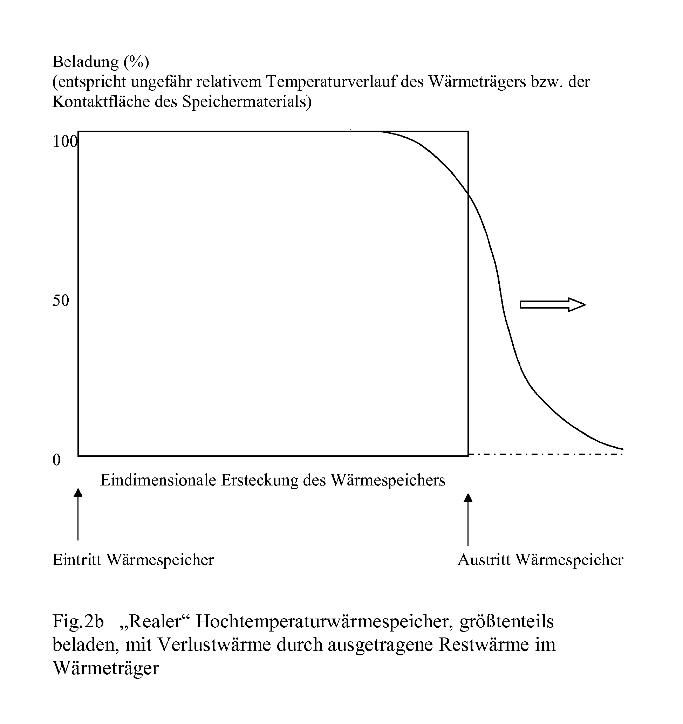

**Fig.2b** zeigt, was geschieht, wenn man den Wärmespeicher möglichst voll beladen möchte: Dann wandert der vorauseilende Schwanz der Kennlinie bereits aus dem Wärmespeicher heraus, bevor dieser vollständig beladen ist. Dabei trägt er einen großen Teil Wärme mit hinaus. Der Anteil der ausgetragenen Wärme ist proportional der Fläche unterhalb des ausgetretenen Schwanzes der Kennlinie.

Verzichtet man auf diesen Teil, so verringert sich der Wirkungsgrad des Wärmespeichers, und es fehlt bei der späteren Entladung des Wärmespeichers ein Teil der Wärme zur Wiedererwärmung des Wärmeträgers, falls der Wärmeträger seine Restwärme nach dem Austritt aus dem Speicher während des Beladungszyklus bis zum Beginn des späteren Entladungszyklus an die Umwelt abgegeben hat.

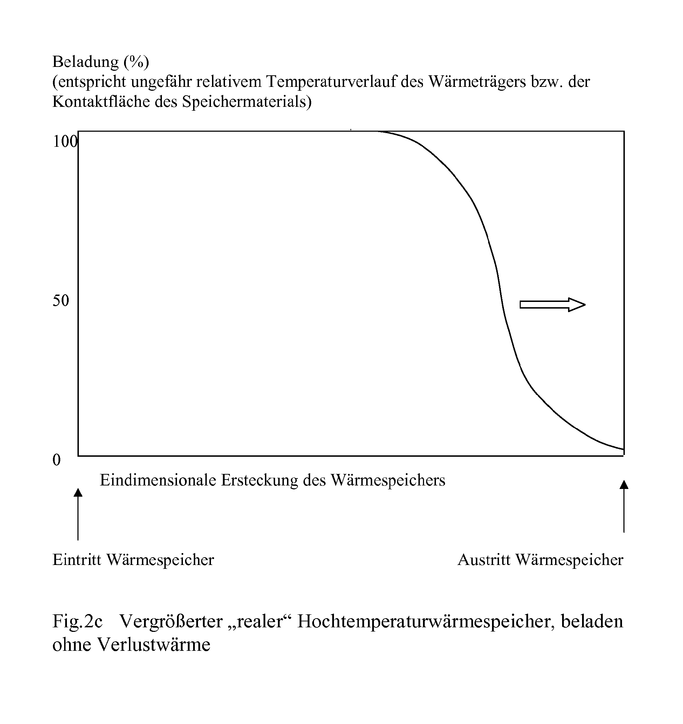

Verzichtet man auf diesen Teil nicht, so darf der Speicher nicht vollständig gefüllt werden. Das bedeutet, daß der teure Hochtemperaturwärmespeicher größer ausgelegt werden muß als nötig (oder nicht so lange beladen werden darf). Dieser Fall eines größeren Hochtemperaturspeichers, der ohne Verlustwärme beladen ist, ist in **Fig.2c** dargestellt. Die Fläche oberhalb der Kennlinie innerhalb des "Speicherrechtecks" ist proportional der im Speicher noch verfügbaren freien Speicherkapazität bis zum Erreichen der Maximaltemperatur überall im Speichermaterial.

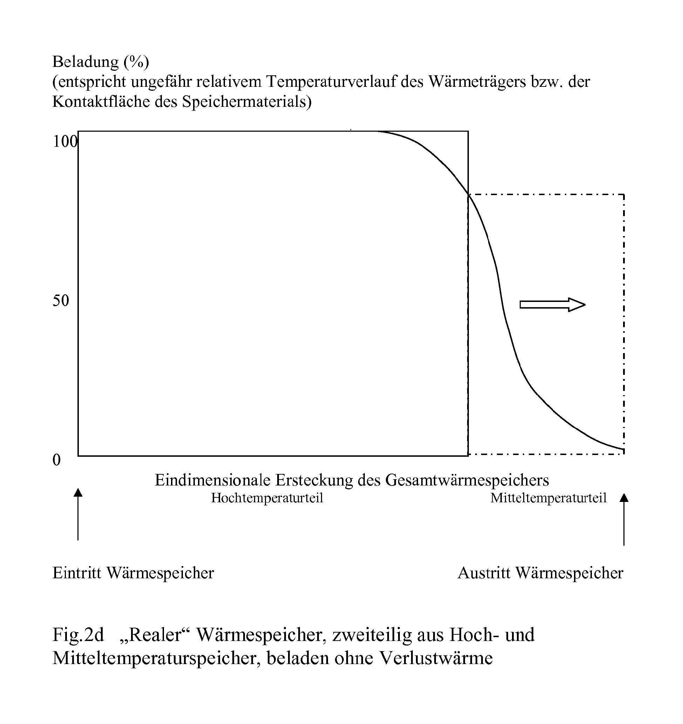

Freie ungenutzte Speicherkapazität ist in einem Hochtemperaturspeicher sehr teuer! Die Erfindung löst dieses Problem, indem sie bei der Beladung die Wärme des vorauseilenden Schwanzes der Kennlinie (also die Restwärme im Wärmeträger) in einem anderen günstigeren Wärmespeichermaterial abspeichert, welches keine so hohen Temperaturen aushalten muß! Über die Höhe der maximalen Speichertemperatur in diesem Speichermaterial läßt sich bestimmen, welchen Anteil des vorauseilenden Schwanzes der Kennlinie man darin abspeichern kann. **Fig.2d** zeigt schematisch diesen Fall am Beispiel eines Speichers aus einem Hochtemperaturteil und einem Mitteltemperaturteil. (Diese müssen nicht unbedingt räumlich aneinandergrenzen, sondern können räumlich getrennt sein.) Der Mitteltemperaturteil kann in diesem Beispiel bis ungefähr 75% der Temperatur des Hochtemperaturteiles thermisch belastet werden. (Mit 75% der maximalen Temperatur ist hier 75% der Temperatur zwischen heißer Eintrittstemperatur des Wärmeträgers in den Gesamtwärmespeicher und niedrigster Austrittstemperatur aus dem Gesamtwärmespeicher gemeint. Es handelt sich also um relative Temperaturen.) Zudem ist die Wärmekapazität der beiden Speichermaterialien in diesem Beispiel der Einfachheit halber gleich und auch die Geschwindigkeit des Wärmeüberganges zwischen Wärmeträger und Speichermaterial ist hier in beiden Speichermaterialien gleich. Dann verläuft die Kennlinie stetig differenzierbar durch die Verbindung zwischen den beiden Speicherteilen.

Der Speicher ist hier auch ohne Verlustwärme beladen, doch ist die freie unbenutzte Speicherkapazität im teuren Hochtemperaturspeicher wesentlich kleiner als in Fig.2c. Im Mitteltemperaturteil verbleibt zwar noch eine größere Speicherkapazität ungenutzt, doch ist diese pro Kilojoule deutlich billiger als im Hochtemperaturteil!

Zudem ist, wie man erkennen kann, die Summe aus den Flächen oberhalb der Kennlinie im Hochtemperaturteil und oberhalb der Kennlinie im Mitteltemperaturteil um das oberhalb des Mitteltemperaturteils fehlende Rechteck kleiner als in Fig.2c. Das bedeutet, daß für die gleiche gespeicherte Wärmemenge die notwendige zur Verfügung zu stellende Speicherkapazität geringer ist!

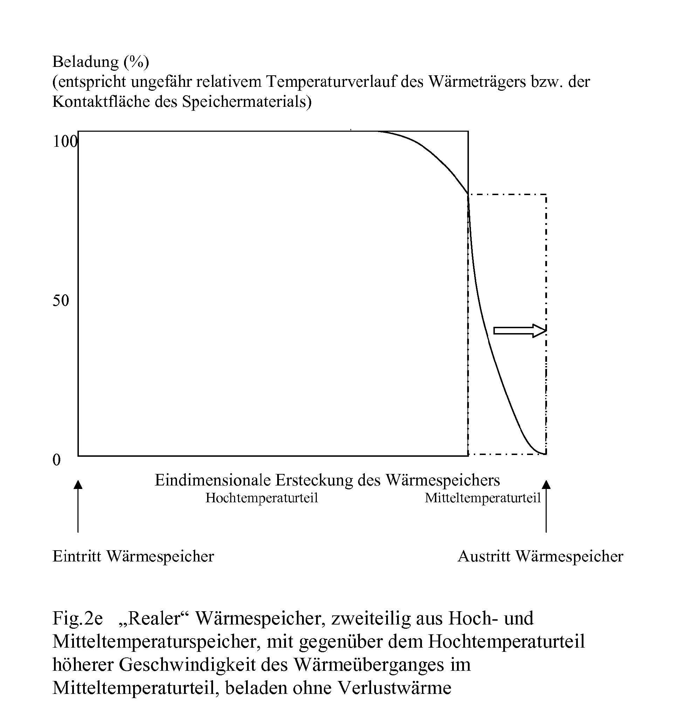

Im Falle, in dem die Wärmeübertragung im Speicherteil mit der niedereren Temperatur schneller vor sich ginge (z.B. weil man ein günstigeres Material wählen kann), wiese die Kennlinie an der Stelle des Überganges zwischen den beiden Speicherteilen einen Knick nach unten auf, so wie es in **Fig.2e** dargestellt ist. In so einem Falle kann der nachgeschaltete Niedertemperaturspeicherteil kürzer ausgeführt werden, wie es in der Fig.2e auch dargestellt ist.

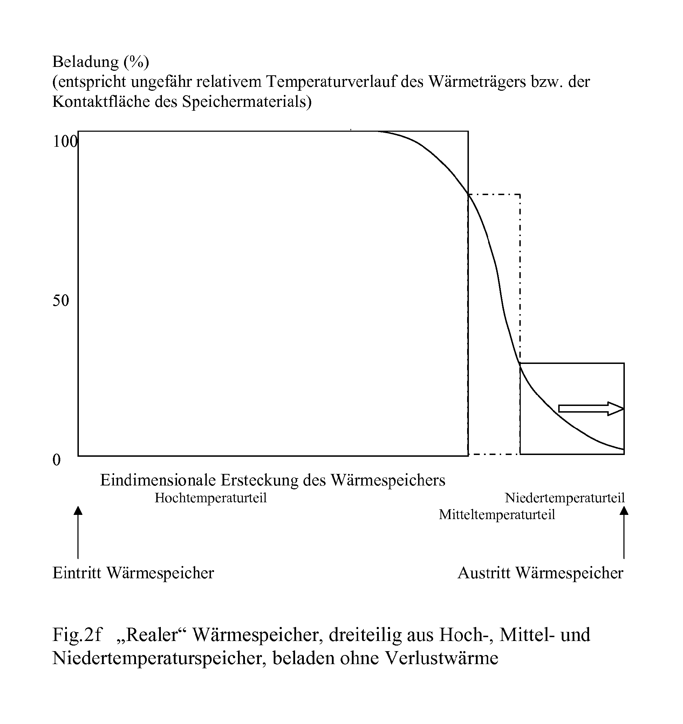

Der Gesamtwärmespeicher kann auch aus mehr als zwei Speicherteilen für unterschiedliche Temperaturbereiche zusammengesetzt sein. Dieser Fall ist in **Fig.2f** beispielhaft dargestellt. Hier weist der Mitteltemperaturteil hinter dem Hochtemperaturteil eine maximale Temperaturbeständigkeit von 75% der Temperatur des Hochtemperaturspeicherteiles auf und der dritte Speicherteil, ein Niedertemperaturteil, ungefähr 30% der Temperatur des Hochtemperaturspeicherteiles. Auch in diesem Beispiel ist, wie in Fig.2d, der Einfachheit halber die Wärmekapazität aller Speichermaterialien gleich angesetzt und auch die Geschwindigkeit des Wärmeüberganges zwischen Wärmeträger und Speichermaterial ist hier in allen drei Speicherteilen gleich, so daß die Kennlinie an den Übergängen zwischen den Speicherteilen für diese nur beispielhafte Ausführung keine Knicke aufweist. Wenn man die Größe der Flächen oberhalb der Kennlinie innerhalb der jeweiligen "Speicherrechtecke" betrachtet, so erkennt man, daß gegenüber der Fig.2d eine weitere Reduzierung der freien ungenutzten teuren Speicherkapazität des Hochtemperaturspeicherteiles erzielt wurde, wobei die ungenutzte Speicherkapazität pro Kilojoule im besonders billigen Niedertemperaturteil des Gesamtwärmespeichers noch kostengünstiger ist, als im Mitteltemperaturteil und außerdem auch insgesamt weniger ungenutzte Speicherkapazität bereitgehalten werden muß.

Da der Gesamtwärmespeicher, während er beladen wird, an seinem Eingang (ins Hochtemperatursegment), in den der fluide wärmeabgebende Wärmeträger eintritt, immer eine höhere Temperatur aufweist, als an seinem Ende, an dem der wärmeabgebende Wärmeträger austritt, wird also erfindungsgemäß am Wärmespeichereingang ein teureres, hohe Temperaturen aushaltendes Wärmespeichermaterial und teurere hitzebeständigere Armaturen und Wandungen eingesetzt und an seinem Austritt ein weniger wärmebeständiges, aber dafür billigeres Speichermaterial! Dort sind auch Behältnis und Armaturen bevorzugt aus günstigeren Materialien gefertigt. Auch die den Wärmeträger (z.B. Druckluft) führenden Leitungen bestehen bevorzugt im Bereich mit tieferen Temperaturen aus einem kostengünstigeren Material.

Das billigere, weniger hitzeresistente Wärmespeichermaterial ist dabei in der Lage, die Restwärme oder den größten Teil davon aufzunehmen, die noch im wärmeabgebenden Wärmeträger verblieben war, während er durch den Wärmespeicher fließt und aus dem Hochtemperaturteil in das Segment für niedrigere Temperaturen übergeht. Mit niedrigen Temperaturen sind hier keine Temperaturen vergleichbar der Raumtemperatur gemeint, sondern Temperaturen, die niedriger sind, als im Hochtemperaturbereich. Z.B. kann das Segment hinter dem Hochtemperatursegment für Temperaturen bis 450°C ausgelegt sein, wenn der Hochtemperaturbereich bis 600°C ausgelegt ist. Wenn man mehr als zwei unterschiedliche Materialien als Speichermaterialien verwendet, könnte man z.B. am Eintritt des wärmeabgebenden Wärmeträgers Stahl/Eisen oder Keramik oder einen metallischen Latentwärmespeicher als Hochtemperatursegment wählen, dann in einem anschließenden Mitteltemperaturteil, in dem nur noch Temperaturen von maximal etwa 450 Grad erreicht werden, billigen Beton oder Steinsalz und, nach einem eventuell weiteren Speichermaterial, zum Schluß am Austritt des Wärmespeichers billiges Wasser, das sehr hohe Wärmekapazität für die verbliebene Niedertemperaturwärme aus dem Wärmeträger aufweist und die Wärme auch sehr schnell über Konvektion von metallischen Leitungen, in denen der Wärmeträger fließt, aufnehmen kann.

Erlaubt man dem Wasser auch unter Druck zu stehen, so kann mit diesem Niedertemperaturwärmespeichersegment noch Wärme von deutlich über 100 Grad Celsius sehr effektiv gespeichert werden. Noch mehr gilt dies bei Verwendung von billigen, höhersiedenden wässrigen Salzlösungen (z.B. Calciumchloridlösung), besonders, wenn auch diese unter Druck stehen dürfen. Wässrige Salzlösungen haben gegenüber geschmolzenen Salzen den Vorteil, sich bei zu tiefer Temperatur nicht zu verfestigen, falls die Lösungen bei Umgebungstemperatur gesättigt sind. Dadurch bleibt, anders als bei vielen Latentwärmespeichern, der Wärmeübergang vom wärmeträgerführenden Rohr in die Salzlösung relativ temperaturunabhängig!

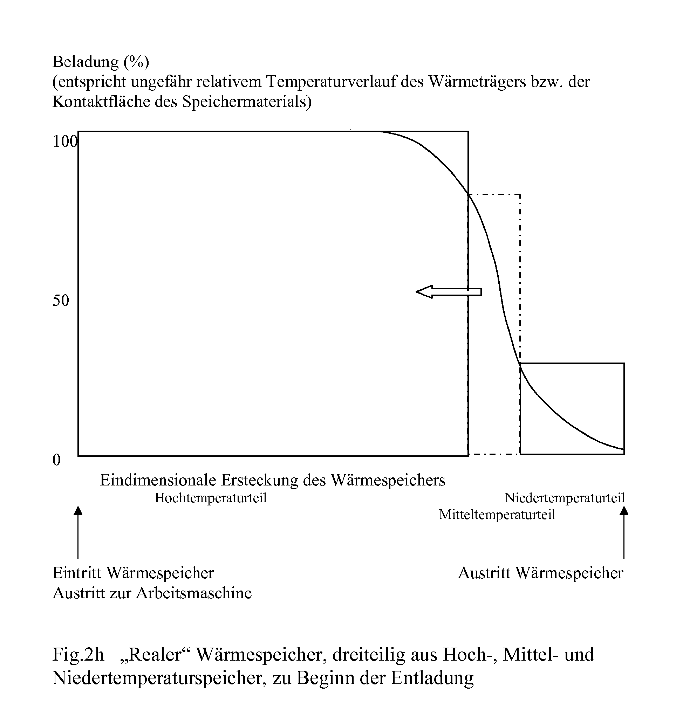

Beim Entladevorgang (**Fig.2g** und **Fig.2h**) des Wärmespeichers, bei dem der kalte Wärmeträger in den Gesamtwärmespeicher an seinem kalten bzw. kälteren Ende eintritt und am heißen Ende zur Arbeitsmaschine hin wieder austritt, dienen die sehr billigen oder zumindest billigeren Speichermaterialien mit niedrigerer Temperatur als Vorerwärmung vor dem/den folgenden Mittel- bzw. Hochtemperatursegmenten. Bei der Entladung muß darauf geachtet werden, daß nicht völlig entladen wird, sondern nur so weit, daß der Wärmeträger noch eine Temperatur aufweist, die in der Arbeitsmaschine direkt oder indirekt keine schädlichen Kondensationsvorgänge zur Folge hat. Wenn geeignete Arbeitsmaschinen (z.B. Tesla-Turbine) zum Einsatz kommt, kann der Wärmespeicher bis zu einer relativ niedrigen Temperatur entladen werden. Ansonsten muß der Entladevorgang früher gestoppt werden.

Die Kennlinie darf nur so weit aus dem Speicher herauswandern, daß diese minimale erlaubte Temperatur für die Arbeitsmaschine noch nicht erreicht ist. Gefüllt werden kann hingegen auch ein völlig entleerter Speicher.

Insgesamt ist es aus thermodynamischen Gründen für den Wirkungsgrad des Wärmespeichers günstig, wenn er vom Wärmeträger mit solcher Geschwindigkeit durchströmt wird, daß die Temperatur im Wärmeträger neben dem Speichermaterial und die Temperatur des angrenzenden Speichermaterials (bzw. des eventuellen Rohres, das das Speichermaterial vom Wärmeträger trennt) sich nur geringfügig unterscheiden. Da dies eine "unendlich langsame" Durchströmung des Wärmespeichers nötig machte, muß durch Simulationsrechnungen eine Durchströmrate gewählt werden, die nicht thermodynamisch, sondern ökonomisch optimiert ist.

Der erfindungsgemäße Speicher ist billiger zu bauen als ein Speicher aus nur einem Material, weil die gleiche Wärmemenge wie in einem reinen Hochtemperaturspeicher nicht in einem einzigen Speichermaterial mit hohen Kosten pro gespeichertem Kilojoule gespeichert wird, sondern in unterschiedlichen Materialien mit unterschiedlichen Kosten pro Kilojoule!

Die relative Größe des Hochtemperatursegmentes und der Niedertemperatursegmente hängt von der Nichtidealität des Wärmespeichers und von der Wärmekapazität der Speichermaterialien und von der Geschwindigkeit des Wärmeüberganges zu diesen ab.

Die unterschiedlichen Speichermaterialien müssen nicht in der gleichen Hülle angeordnet sein, sondern können modulartig in eigenen Speichereinheiten vorliegen, wobei diese Speichereinheiten dann einfach hintereinandergeschaltet werden.

Mehrere kleine solche Module gleichen Speichermaterials können auch parallel zu einem größeren zusammengeschaltet werden. Dies erlaubt es auch, einen Gesamtspeicher nicht ganz zu füllen, sondern nur teilweise, indem nur einige Untermodule von jedem Temperaturtyp voll beladen werden und andere gar nicht.

Der erfindungsgemäße Speicher erlaubt ein schnelleres Durchleiten des hitzeübertragenden fluiden Wärmeträgers (z.B. Druckluft in Rohren oder mit Direktkontakt zum Speichermaterial), und es muß weniger Rücksicht darauf genommen werden, daß der Wärmeträger nach Eintritt ins Speichermaterial möglichst auf kurzer Wegstrecke schnell und vollständig seine Temperatur an das Material abgibt, wie es bei bisherigen Speichern geplant ist, damit sie bestmöglich gefüllt werden können.

Der erfindungsgemäße Wärmespeicher kaschiert bei gleichem Preis seine Nichtidealität besser, als ein herkömmlicher Wärmespeicher. Insofern können die verwendeten Schichtdicken des Speichermaterials, durch die sich die Wärme ins Innere des Speichermaterials ausbreiten muß, größer gewählt werden und die Strömungskanäle/-rohre durch das Speichermaterial ebenfalls, was den Strömungswiderstand reduziert.

Der Wärmeträger (z.B. ein Gas unter Druck, z.B. Druckluft) darf aber beim Beladen des Wärmespeichers nur so schnell durch den Hochtemperaturteil geleitet werden, daß die Temperatur am Austritt aus dem Hochtemperaturteil die Temperaturbeständigkeit des anschließenden Niedertemperaturteils nicht übersteigt. Eine einfache Temperaturmessung am Austritt aus dem Hochtemperatursegment ist für die Kontrolle und als Steuerparameter sinnvoll. Eine besonders schnelle Beladung des Speichers erzielt man, wenn man zuerst sehr große Massen Wärmeträger (z.B. komprimierte Luft) durch den Wärmespeicher schleust und diese Menge dann mit der Zeit reduziert. Wenn man am Ende nur noch sehr langsam heißen Wärmeträger durch den Speicher fließen läßt, so hat dieser mehr Zeit, seine Wärme abzugeben und der Speicher läßt sich vollständiger füllen. Wenn aber eine unerwartete Energieanforderung im Netz eine plötzliche Entladung des Wärmespeichers notwendig macht, hat man auf diese Weise schon einen volleren Speicher zur Verfügung, als wenn man ständig mit konstanter, aber dafür notwendigerweise geringerer Menge eingeblasen hätte.

Aus dem gleichen Grunde wie beim Beladen des Speichers, ist es auch beim Entladen möglich, anfangs höhere Durchströmungsgeschwindigkeiten des Wärmeträgers im Wärmespeicher zuzulassen. Hier sind sogar für den Fall sehr hoher Leistungsanforderung aus dem Netz noch höhere Durchflußmengen pro Zeit erlaubt, weil der Wärmeträger stets aus einem Bereich niederer Temperatur in einen solchen mit höherer Temperaturbeständigkeit eintritt.

Um die Regelung, vor allem beim Beladevorgang, zu vereinfachen, ist es möglich, zwischen den unterschiedlichen Speichermaterialien Pufferstrecken vorzusehen, die bei einer versehentlichen Fehlsteuerung der Regelung kurzfristig hohe Temperaturen aufnehmen können ohne daß gleich das folgende Speichermaterial geschädigt wird. Eine Möglichkeit hierfür ist z.B. die Verwendung besonders dickwandiger Stahlrohre als Leitrohre für den Wärmeträger in diesem Bereich.

Der erfindungsgemäße Hochtemperaturwärmespeicher aus mehreren Segmenten für unterschiedliche Temperaturbereiche ist auch statisch stabiler als einteilige nach Stand der Technik! Im Falle eines unter hohem Druck stehenden Wärmespeichers, wie er z.B. in der EP 1 857 614 B1 beschrieben ist, bestehen z.B. hohe Anforderungen an die Stabilität des Mantels! Diese Stabilität ist um so schwerer zu gewährleisten, je größer der Mantel ist und je höher die Temperaturen sind, da oberhalb von 500 bis 600 °C die mechanische Stabilität vieler üblicher Materialien sehr stark nachläßt!

Um die Stabilität dennoch zu gewährleisten ist gemäß Stand der Technik hoher technischer Aufwand nötig! (Z.B. Kühlung der Wand, die gegen Ausfall gesichert sein muß!)!

Die Erfindung, die die zu speichernde Gesamtwärmemenge $Q_{gesamt}$ in Unteranteile aufspaltet, die bei unterschiedlichen Temperaturen gespeichert werden, ermöglicht hingegen, den Speicherteil mit der höchsten Temperatur etwas kleiner und dadurch auch schon von der Konstruktion des Druckmantels her kostengünstiger auszulegen, da sich mit dem geringeren Volumen des Druckmantels auch die Stabilität desselben stark erhöht, wodurch Material eingespart werden kann!

Aus der Form der Kennlinie läßt sich die Größe der einzelnen Speicherteile berechnen oder zumindest schon einmal abschätzen. Die in den Figuren dargestellten Kennlinien sind aber nur idealisierte Kennlinien. In realen Wärmespeichern mit seinen komplizierten Strömungsverhältnissen sehen sie weniger symmetrisch aus. Durch Simulationsrechnungen nach bekannten Verfahren lassen sich aber für das betreffende Speichermaterial und die verwendeten Durchströmungskanalformen genauere Kennlinien errechnen, aus denen dann die notwendige Größe der Speicherteile für den jeweiligen Temperaturbereich berechnet werden kann.

Wenn viele gleichartige Wärmespeicher gebaut werden sollen, so ist es sinnvoll, an einem ersten gebauten Speicher die Kennlinie in den einzelnen Speicherteilen auszumessen und diese Meßwerte dann dazu zu verwenden, bei den später gebauten Speichern die Ausführung weiter zu optimieren.

**Patentansprüche**

**1.** Hochtemperaturwärmespeicher zur Speicherung thermischer Energie von mehr als 400°C, der mit einem fluiden Wärmeträger be- und entladen wird, **dadurch gekennzeichnet, daß** er aus mindestens zwei hintereinander angeordneten Speicherteilen besteht, die jeweils unterschiedliche Speichermaterialien enthalten, und in denen die Gesamtwärmemenge $Q_{gesamt}$ des Wärmeträgers, bis auf einen kleinen Verlustanteil $Q_{Verlust}$, der maximal 5% des Gesamtwärmemenge beträgt, aufgeteilt in mindestens zwei Anteile, bei unterschiedlichen Temperaturen gespeichert ist.

**2.** Hochtemperaturwärmespeicher nach Anspruch 1, **dadurch gekennzeichnet, daß** die Speicherteile voneinander getrennte, durch rohrförmige Verbindungsstücke verbundene Module sind.

3. Hochtemperaturwärmespeicher nach mindestens einem der Ansprüche 1 und 2, **dadurch gekennzeichnet, daß** die Speicherteile durch Mittel/Rohre verbunden sind, die eine so hohe Wärmespeicherkapazität als Puffer aufweisen, daß sie während des Beladevorganges des Wärmespeichers einen eventuell noch zu heißen Wärmeträger vor dem Eintritt in den nachgeschalteten Speicherteil, der nur eine niedrigere Temperatur aushält, auf diese niedrigere Temperatur abkühlen.

4. Verfahren zur Speicherung von thermischer Energie von mehr als 400 °C in einem Wärmespeicher nach mindestens einem der Ansprüche 1 bis 3, **dadurch gekennzeichnet, daß** die Wärmemenge $Q_{gesamt}$ in mindestens zwei Anteile aufgeteilt wird, die bei unterschiedlicher Temperatur und in unterschiedlichen Speichermaterialien gespeichert werden, wobei zur Beladung des Wärmespeichers der Wärmeträger zuerst bei hoher Temperatur in den Hochtemperaturteil des Wärmespeichers eintritt, dann einen Teil seiner Wärme dort abgibt und mit tieferer Temperatur in den nachfolgenden Teil des Wärmespeichers eintritt, der nur gegen eine niedrigere Temperatur als die des vorhergehenden Speicherteils beständig ist und daraufhin mit noch tieferer Temperatur in einen eventuell nachfolgende weiteren Speicherteil und so fort, bis der Wärmeträger am Ende des Wärmespeichers mit einer Temperatur nahe der Umgebungstemperatur austritt und dabei maximal 5% der Gesamtwärmemenge beim Eintritt in den Wärmespeicher mitführt.

5. Verfahren nach Anspruch 4, **dadurch gekennzeichnet, daß** die Beladung nicht mit konstanter Geschwindigkeit erfolgt, sondern zuerst pro Zeiteinheit größere Mengen an Wärmeträger eingeleitet werden und dessen Menge dann mit der Zeit vermindert wird, wobei die pro Zeit eingespeiste Menge spätestens dann heruntergeregelt wird, wenn ein Temperatursensor am Übergang zwischen Hochtemperaturteil und folgendem Speicherteil eine Temperatur anzeigt, die in den Bereich der maximalen Temperaturverträglichkeit des Speichermaterials in diesem nachfolgenden Speicherteil kommt.

Beladung (%)
(entspricht ungefähr Temperaturverlauf des Wärmeträgers bzw. des Speichermaterials)

Eindimensionale Ersteckung des Wärmespeichers

Eintritt Wärmespeicher          Austritt Wärmespeicher

Fig. 1a „Idealer" Wärmespeicher, während der Beladung

Beladung (%)
(entspricht ungefähr Temperaturverlauf des Wärmeträgers bzw. des
Speichermaterials)

Fig. 1b „Idealer" Wärmespeicher, beladen

Beladung (%)
(entspricht ungefähr Temperaturverlauf des Wärmeträgers bzw. des Speichermaterials)

Fig. 1c „Idealer" Wärmespeicher, während der Entladung

Beladung (%)
(entspricht ungefähr Temperaturverlauf des Wärmeträgers bzw. des
Speichermaterials)

Eindimensionale Ersteckung des Wärmespeichers

Eintritt Wärmespeicher          Austritt Wärmespeicher
Austritt zu Arbeitsmaschine

Fig. 1d „Idealer" Wärmespeicher, entladen

Beladung (%)
(entspricht ungefähr relativem Temperaturverlauf des Wärmeträgers bzw. der
Kontaktfläche des Speichermaterials)

Fig.2a „Realer" Hochtemperaturwärmespeicher, während Beladung

Beladung (%)
(entspricht ungefähr relativem Temperaturverlauf des Wärmeträgers bzw. der
Kontaktfläche des Speichermaterials)

Eindimensionale Ersteckung des Wärmespeichers

Eintritt Wärmespeicher

Austritt Wärmespeicher

Fig.2b „Realer" Hochtemperaturwärmespeicher, größtenteils
beladen, mit Verlustwärme durch ausgetragene Restwärme im
Wärmeträger

Beladung (%)
(entspricht ungefähr relativem Temperaturverlauf des Wärmeträgers bzw. der
Kontaktfläche des Speichermaterials)

Eindimensionale Ersteckung des Wärmespeichers

Eintritt Wärmespeicher

Austritt Wärmespeicher

Fig.2c  Vergrößerter „realer" Hochtemperaturwärmespeicher, beladen
ohne Verlustwärme

Beladung (%)
(entspricht ungefähr relativem Temperaturverlauf des Wärmeträgers bzw. der Kontaktfläche des Speichermaterials)

Eindimensionale Ersteckung des Gesamtwärmespeichers
Hochtemperaturteil                                    Mitteltemperaturteil

Eintritt Wärmespeicher                              Austritt Wärmespeicher

Fig.2d  „Realer" Wärmespeicher, zweiteilig aus Hoch- und Mitteltemperaturspeicher, beladen ohne Verlustwärme

Beladung (%)
(entspricht ungefähr relativem Temperaturverlauf des Wärmeträgers bzw. der Kontaktfläche des Speichermaterials)

Eintritt Wärmespeicher                              Austritt Wärmespeicher

Fig.2e  „Realer" Wärmespeicher, zweiteilig aus Hoch- und Mitteltemperaturspeicher, mit gegenüber dem Hochtemperaturteil höherer Geschwindigkeit des Wärmeüberganges im Mitteltemperaturteil, beladen ohne Verlustwärme

Beladung (%)
(entspricht ungefähr relativem Temperaturverlauf des Wärmeträgers bzw. der Kontaktfläche des Speichermaterials)

Fig.2f „Realer" Wärmespeicher, dreiteilig aus Hoch-, Mittel- und Niedertemperaturspeicher, beladen ohne Verlustwärme

Beladung (%)
(entspricht ungefähr relativem Temperaturverlauf des Wärmeträgers bzw. der Kontaktfläche des Speichermaterials)

Eindimensionale Ersteckung des Wärmespeichers

Eintritt Wärmespeicher
Austritt zur Arbeitsmaschine

Austritt Wärmespeicher

Fig.2g   „Realer" Hochtemperaturwärmespeicher, während Entladung

Beladung (%)
(entspricht ungefähr relativem Temperaturverlauf des Wärmeträgers bzw. der Kontaktfläche des Speichermaterials)

Eindimensionale Ersteckung des Wärmespeichers

Hochtemperaturteil

Niedertemperaturteil
Mitteltemperaturteil

Eintritt Wärmespeicher
Austritt zur Arbeitsmaschine

Austritt Wärmespeicher

Fig.2h „Realer" Wärmespeicher, dreiteilig aus Hoch-, Mittel- und Niedertemperaturspeicher, zu Beginn der Entladung

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2010084161 A1
- WO 2011163399 A1
- EP 1857614 B1